# EUROPEAN PATENT APPLICATION

(11) **EP 1 980 155 A1**
(43) Date of publication of application: **15.10.2008**
(21) Application number: 07007268.1
(22) Date of filing: 06.04.2007
(51) Int. Cl.: A23F 5/12

(54) **Method for manufacturing a coffee tablet, and a coffee tablet for preparing coffee obtained with such method**

(71) Applicant: Sara Lee/DE N.V., 3532 AA Utrecht (NL)
(72) Inventor: van Bergen, Cornelis, 3992 RB Houten (NL)
(74) Representative: van Loon, C.J.J.

(57) **Abstract**

A method for manufacturing a coffee tablet designed for preparing coffee therewith, wherein an amount of coffee starting material is compacted at a particular compressive pressure so that a coffee tablet with a particular hardness is obtained, while the particular hardness at a particular compressive pressure depends on a number of coffee parameters, such as moisture content of the coffee starting material, degree of roast of the coffee starting material and/or pouring volume of the coffee starting material, whose coffee parameter values are selected such that the obtained hardness of the coffee tablet effects disintegration thereof at a desired moment, in a desired manner. The invention further relates to a coffee tablet for preparing coffee manufactured with such a method.

## Description

The invention relates to a method for manufacturing a coffee tablet.
The intended tablet must be suitable for use in a drip filter coffee machine. This means that the tablets are to be placed in a filter placed in a filter holder of such a machine and, with normal use of the drip filter coffee machine, are to lead to a coffee brew with a desired strength and taste.

It is important that such a coffee tablet has a particular strength. When such a coffee tablet is manufactured with the aid of a relatively low compressive pressure, a coffee tablet with a relatively low hardness is obtained. Such a coffee tablet has a relatively low firmness and there is a good chance that during packaging and/or transport, it does not remain in one piece. When such a coffee tablet is manufactured with the aid of compacting the grindings at a relatively high pressure, a relatively firm coffee tablet is obtained. Such a coffee tablet is sufficiently strong to remain in one piece during packaging and/or transport, however, the quality of the coffee prepared with it is relatively poor, more particularly the brewing strength of the obtained brew is relatively low (less than 80%, relative to the brewing strength obtained with the same amount, but non-compacted coffee).

The present invention is based on the insight that when a coffee tablet is used in the preparation of a coffee in a standard filter coffee machine, this coffee tablet can be designed such that it gradually disintegrates during the preparation process. Research has shown that in such a manner, with such a coffee tablet, the coffee extracts are gradually released from the compacted coffee grindings. As a result, only desired coffee extracts are extracted from the coffee grindings. Gradual disintegration prevents over-extraction and, hence, also the extraction of undesired disadvantageous substances such as, for instance, bitter tasting chlorogenic acids from the coffee grindings, which does occur when preparing coffee from loose coffee grindings. Therefore, coffee prepared with the coffee tablet is a milder coffee than the prepared coffee that is formed when loose ground coffee is used during the preparation of the coffee.

The object of the present invention is to provide a method for manufacturing a coffee tablet for preparing coffee therewith, which does not have the above-mentioned drawbacks. More particularly, the object of the present invention is to provide a method for manufacturing a coffee tablet, wherein the coffee tablet obtains a composition or hardness such that the coffee tablet can withstand packaging and transport without disintegrating at undesired moments, and, at the same time, is suitable for preparing a qualitatively good coffee.

To this end, the invention provides a method for manufacturing a coffee tablet designed for preparing coffee therewith, wherein an amount of coffee starting material is compacted at a particular compressive pressure so that a coffee tablet with particular hardness is obtained, while the particular hardness at a particular compressive pressure depends on a number of coffee parameters, such as moisture content of the coffee starting material, degree of roast of the coffee starting material and/or pouring volume of the coffee starting material, whose parameters are selected such that the obtained hardness of the coffee tablet effects the disintegration thereof at a desired moment, in a desired manner.

The invention also provides a coffee tablet for preparing coffee, preferably manufactured with a method according to the invention, wherein the coffee tablet has a particular hardness which is obtained from an amount of coffee starting material compacted at a particular pressure, while the particular hardness at a particular pressure is obtained depending on a number of coffee parameters, such as moisture content of the coffee starting material, degree of roast of the coffee starting material and/or pouring volume of the coffee starting material, whose coffee parameter values are selected such that the hardness of the coffee tablet is designed for disintegration thereof at a desired moment, in a desired manner.

Research has shown that the coffee parameters mentioned are significant for obtaining a coffee tablet with a particular minimum and maximum hardness. The minimum hardness is important for preventing disintegration of the coffee tablet, and the maximum hardness is important especially for the capacity of gradual disintegration during preparation of the coffee and the quality of the coffee dependent thereon. It is noted that the hardness of the coffee tablet is determined by the force required for crushing a coffee tablet, and therefore, the hardness of the coffee tablet is expressed in Newton. Crushing is carried out by placing the coffee tablet between two vertically disposed plates, movable towards and away from each other in horizontal direction. When the plates move towards each other, the force applied by the coffee tablet to the movable plate is measured. Here, the bean is in a direction transverse to the groove side between the plates and therefore, the plates press on the coffee bean-shaped tablet by their "long sides".

When the coffee parameter values of the coffee parameters, such as moisture content of the coffee starting material, degree of roast of the coffee starting material and/or pouring volume of the coffee starting material are selected well, the coffee tablet, having been manufactured at a particular pressure, will have a particular hardness. As the hardness of the coffee tablet can be controlled well in this manner, the coffee tablets manufactured with the method will gradually disintegrate when preparing coffee. The chance of disintegration during packaging and/or transport at such a hardness is relatively low, while the prepared coffee from the coffee tablets obtained in this manner is a qualitatively good coffee (minimally 80-% of the brewing strength obtained when brewing coffee utilizing the same amount of loose coffee grindings of the same type). To this end, according to a further elaboration of the invention, it is favourable when the particular compressive pressure is in the range of 70 - 130 bar, and the hardness of the coffee tablet, depending on the coffee parameter values at the particular compressive pressure, is in the range of 20 - 75 N, more particularly 30 - 55 N. The compressive pressure is the pressure required for compacting the coffee starting material, for instance in the shape of coffee grindings, into the desired coffee tablet shape.

The degree of roast of the coffee starting material after grinding thereof depends on, *inter alia,* the roasting time of the coffee beans, the roasting temperature and the amount of coffee starting material roasted at one time. The lower the degree of roast of the coffee starting material, the darker the coffee is. It has appeared that darker coffee can be compacted better than lighter coffee for obtaining a tablet with the required strength or hardness. The degree of roast of the coffee starting material is determined by measuring the reflection of light on a levelled amount of ground coffee starting material. This can be carried out with, for instance, an agtron unit. An amount of light is directed at the levelled amount of grindings, for instance of a wavelength of 640 nm. Depending on the darkness of the grindings, an amount of light is reflected and measured. The value indicates the degree of roast. According to a further elaboration of the invention, the coffee parameter value of the degree of roast of the coffee starting material prior to pressing the coffee tablet is preferably in the range of 80 - 30, preferably 60 - 40, and is, more particularly, substantially 50. With coffee starting material with these values, upon compacting, a tablet with required strength is obtainable which, furthermore, disintegrates at the correct rate when in contact with water.

Compacting the coffee starting material for obtaining a firm coffee tablet further depends on the pouring volume of the coffee starting material, therefore, the volume of the coffee after grinding. The higher the pouring volume, the better the coffee starting material can be compacted for forming a firm coffee tablet. According to a further elaboration of the invention, to that end, the coffee parameter value of the pouring volume of the coffee starting material prior to compacting is, preferably, in the range of 500 - 850 ml per 250 g coffee starting material and, more particularly, is approximately 700 ml per 250 g coffee starting material. The pouring volume of coffee starting material is determined by measuring the volume of 250 g of coffee after grinding. In order to determine this volume, an amount of ground coffee starting material is poured from a funnel into a tray provided thereunder to that end, which tray has a volume of 250 ml. The tray has a slide which is closed, so that the volume of coffee grindings of 250 ml remains in the tray. Then, the weight of the coffee grindings in the tray is determined and converted into a pouring volume expressed in ml/250g.

It has further appeared that the moisture content of the coffee starting material is of influence on the degree of compacting of the coffee starting material and is also important for the hardness of the eventual coffee tablet and the eventual quality of the prepared coffee. In general, it has been found that a higher moisture content yields better results. According to a further elaboration of the invention, the coffee parameter value of the moisture content of the coffee starting material prior to compacting the coffee tablet is, preferably, 2 - 8%, preferably 2-6% and, more particularly, approximately 4%. The moisture content of the coffee starting material is formed in that the coffee starting material is quenched with moisture before the coffee starting material is ground. The moisture content is determined by measuring an extent of weight loss of 5 g coffee starting material as a result of drying the coffee starting material in an oven for 3 hours at 103°C.

It is particularly advantageous if the coffee parameter values degree of roast, pouring volume and moisture content do not exceed the boundaries mentioned of the range mentioned at that coffee parameter value. When one of the coffee parameters is outside the boundaries mentioned, the quality of the coffee prepared with the coffee tablet will be relatively poor. A well-drinkable coffee with a high quality is obtained when the coffee parameters mentioned are within the ranges mentioned. It is preferred that first, the degree of roast of the coffee starting material is determined and, depending thereon, the moisture content and/or the pouring volume of the coffee starting material is determined. In this manner, the different parameters can be adjusted during the manufacturing process to thus increase the quality of the eventual coffee tablet.

According to a further elaboration of the invention, the coffee starting material are coffee grindings obtained by grinding roasted coffee beans. According to a further elaboration of the invention, the coffee starting material is preferably ground to form coffee grindings with a particle size of 0.3 - 0.6 mm, more particularly with a particle size of 0.45 mm.

According to a further elaboration of the invention, it is furthermore advantageous when, after grinding the roasted beans, the coffee grindings are not finished before compacting of the grindings. When the coffee grindings are finished, the sharp angles of the coffee particles of the grindings are removed. The coffee particles obtain a rounder shape which is less favourable to the strength of the tablet obtained therefrom through compacting. Non-finished coffee grindings have better properties for manufacturing the coffee tablet with the desired hardness.

According to a further elaboration of the invention, after compacting the coffee tablet with a first hardness, around the compacted coffee tablet, at least one further layer of coffee starting material is composed with the same or with a different hardness, so that the coffee tablet comprises at least two layers of different hardnesses. In a further elaboration of the invention, the compacted coffee tablet is encapsulated by at least one liquid-soluble capsule. Such a composition of the coffee tablet can further have advantageous results for the capacity of disintegration of the coffee tablet during preparation of the coffee. Also, when several capsules are present, by varying the values of the different hardnesses of the different layers and/or by varying the different sorts of compositions of soluble capsules, the course of the disintegration of the coffee tablet during the preparation of coffee can be varied. This can also have an influence on the hardness of the coffee tablet and the capacity for not disintegrating upon, for instance, packaging and/or transport of the coffee tablets.

Further elaborations of the invention are described in the subclaims and will hereinbelow be explained in further detail, with reference to the drawing. In the drawing:
Fig. 1 shows a diagram of the compressive pressure and the hardness of a coffee tablet;
Fig. 2 shows a perspective view of a tablet according to the invention;
Fig. 3 shows a cross-section of the embodiment shown in Fig. 2;
Fig. 4 shows a second embodiment of a compacted tablet in cross-section;
Fig. 5 shows a first embodiment of a tablet with two capsules; and
Fig. 6 shows a second embodiment of a tablet with two capsules.

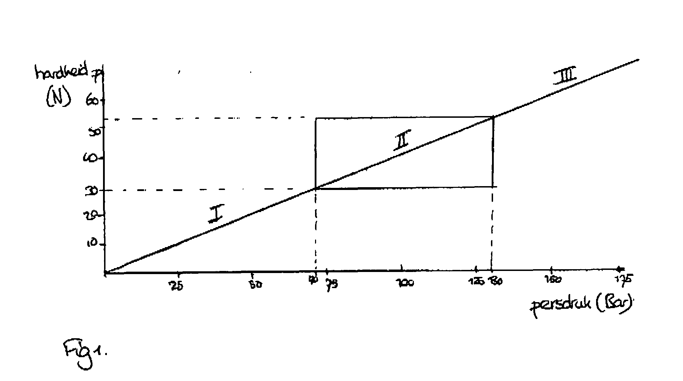

In Fig. 1, a diagram is disclosed wherein the compressive pressure required for manufacturing a coffee tablet designed for preparing coffee therewith is plotted against the hardness of the coffee tablet. Such a coffee tablet is designed for gradually disintegrating during a coffee preparation process, so that the coffee extracts are gradually released to the water flowing therethrough to thus obtain a relatively mild coffee. Such coffee tablets are intended for preparing coffee in standard, commercially available filter coffee machine, for instance for filter coffee machines with common brewing conditions, hence, times and temperatures which are usual when brewing coffee from loose coffee grindings.

In the diagram, three areas are indicated. When a coffee tablet is manufactured by means of a compressive pressure from area I, the hardness of the coffee tablet will be relatively low. Such a coffee tablet will readily disintegrate, for instance already during packaging and/or transport of the coffee tablet.

When using a compressive pressure from area III, a relatively hard coffee tablet is obtained. However, such a tablet has as a drawback that when preparing coffee, the tablet does not disintegrate in a desired manner, as the tablet is too hard, and therefore not suitable for gradually releasing coffee extracts to the water flowing therethrough. This results in a coffee with poorer properties.

Area II indicates the area from which a particular compressive pressure can be used for manufacturing the coffee tablet. The possible compressive pressure is between 70 and 130 bar, with which a coffee tablet can be manufactured with a hardness of 20 - 75N, more particularly 30 - 55 N. The hardness of the coffee tablet achieved with the selected compressive pressure depends on a number of coffee parameters. These coffee parameters are: the moisture content of the coffee starting material, the degree of roast of the coffee starting material and the pouring volume of the starting material. By favourably selecting the coffee parameter values of these coffee parameters, a desired hardness of the coffee tablet at a particular compressive pressure can be realized.

The coffee parameter value of the degree of roast of the coffee starting material is in the range of 80- 30, preferably between 60 - 40, and is more particularly substantially 50. The darker the coffee, that is, the lower the value, the better the properties of the coffee starting material as to the compactibility thereof and the hardness or strength of the tablet obtained therewith.

The compactibility and, hence, the hardness or strength of the tablet is further positively influenced by a relatively high pouring volume of the coffee starting material. The coffee parameter value of the pouring volume of the coffee starting material is therefore preferably in the range of 500 - 800 ml per 250 g of coffee starting material and is, more particularly, approximately 700 ml per 250 g coffee starting material.

The third coffee parameter which is important to the compactibility of the coffee starting material and, hence, the hardness or strength, is the moisture content of the material. At a moisture content of 2 - 8%, preferably 2 - 6%, and more particularly approximately 4%, good results are obtained.
Examples of coffee tablets with a good hardness for both disintegration during preparation of the coffee and a hardness suitable for packaging and transporting, are coffee tablets with for instance, the following coffee parameter values:
- Example 1:: Moisture content 4%
Degree of roast 52
Pouring volume 700 ml/250 g
Compressive pressure 110 bar
Hardness 40 - 55 N
- Example 2:: Moisture content 3.5 - 4%
Degree of roast 45
Pouring volume 660 ml/250 g
Compressive pressure 110 bar
Hardness 40 - 55 N

It is noted that coffee starting material in the form of loose grindings normally used for preparing coffee in an extra-fine grind filter coffee machine has a moisture content of approximately 3% and a pouring volume of approximately 650 ml/250 for preparing a qualitatively good coffee. This coffee starting material with such values cannot be tableted, or only poorly so.

Other coffee parameters such as blend composition, such as Robusta or Arabica, the roasting time or batch size during roasting have no significant influence on the eventual hardness of the coffee tablet at a particular compressive pressure.

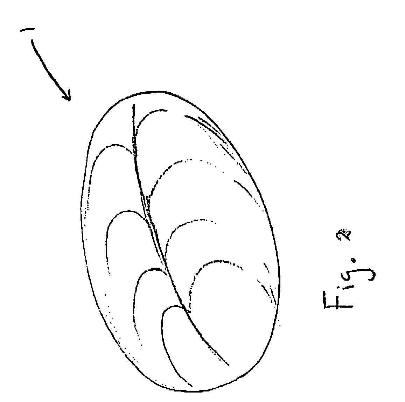

Fig. 2 shows a perspective view of a coffee tablet for preparing coffee manufactured with the method according to the invention. The coffee tablet 1 comprises coffee starting material, such as coffee grindings. In the exemplary embodiment shown, the coffee tablet 1 has the exterior appearance of a large coffee bean. However, this is done only for aesthetic reasons and has no technical effect.

The coffee tablet 1 has a particular hardness which is in the range of 20 - 75 N, more particularly 30 - 55 N. This hardness is obtained from an amount of coffee starting material compacted at a particular compressive pressure. As described hereinabove, the particular hardness of the coffee tablet at a particular compressive pressure is obtained depending on a number of coffee parameters, such as moisture content, degree of roast and pouring volume of the coffee starting material. Preferably, the coffee starting material are grindings obtained by grinding roasted coffee beans. The values of the coffee parameters are selected such that the hardness of the coffee tablet is designed for disintegration thereof at a desired moment, in a desired manner.

Preferably, the coffee tablet 1 has a weight of 2 - 15 g, more particularly a weight of 6 - 8 g. Such tablets simplify dosing an amount of coffee for preparing the desired amount of coffee.

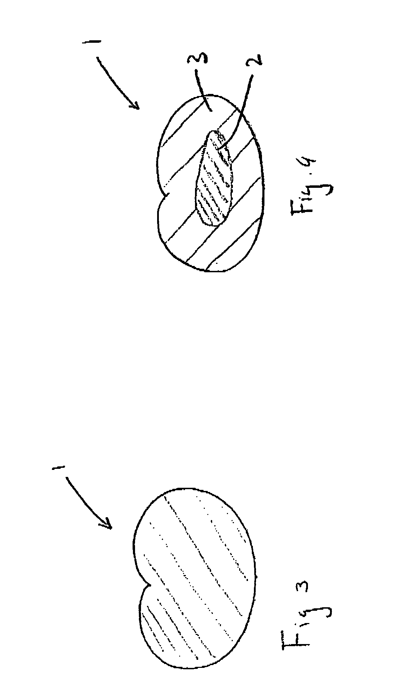

Fig. 3 shows a cross-section of the coffee tablet 1 represented in Fig. 1. It is a coffee tablet 1 which is manufactured by compacting coffee grindings. The coffee tablet 1 comprises no additions other than the coffee grindings proper. The degree of compaction is determinative of the speed at which the coffee tablet 1 disintegrates when it is brought into contact with hot water. Preferably, the gradual disintegration takes up as much time as the entire extraction process for preparing the coffee, so that during the entire extraction process, each time, fresh coffee grindings are exposed to the water. Thus, the release of undesired substances as a result of over-extraction is reduced, and a relatively mild coffee is obtained.

In Fig. 4, a variant is shown wherein the coffee tablet 1 is provided with a core 2 of coffee grindings compacted more firmly than the peel 3 of coffee grindings encapsulating the core 2, which has been compacted less firmly. Naturally, variants hereon are conceivable. For instance, the coffee tablet 1 has a first part 2 with a first hardness and at least a second part 3 provided therearound with the same hardness or other hardness from the first hardness. In this manner, for instance, a coffee tablet 1 can be manufactured around which a layer 3 of a different material is provided, such as a creamer and/or sugar.

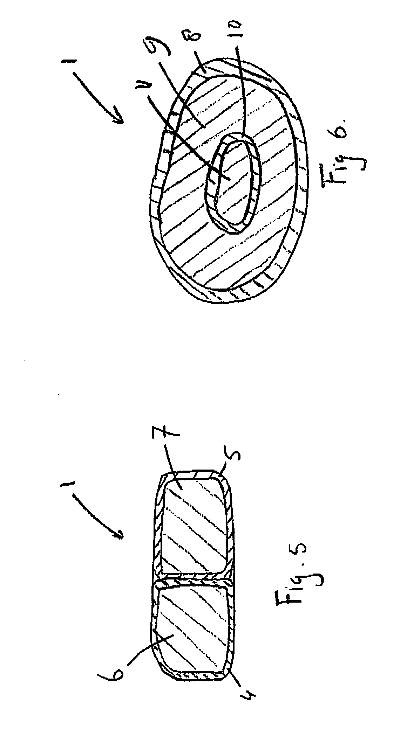

Fig. 5 shows a variant of the coffee tablet 1, provided with two capsules 4, 5 which are each soluble in water. The capsule 4 dissolves more rapidly than capsule 5, so that the material 6 in the capsule 4 is released more rapidly than the material 7 in capsule 5. The two capsules 4 and 5 are disposed side by side and are interconnected. The beverage material 6, 7 can for instance be coffee grindings. It is also possible that one of the beverage materials 6, 7 comprises, for instance, a creamer, sugar or aroma.

Fig. 6 shows a variant wherein the coffee tablet 1 is provided with an outer capsule 8 that encapsulates a first amount of beverage starting material 9 and an inner capsule 10. In turn, the inner capsule 10 encapsulates a second amount of starting material 11. The two capsules 8 and 10 may have been manufactured from the same material, or from different materials. Also, the capsule wall thicknesses can differ from each other. For this exemplary embodiment it holds that the beverage starting material 9, 11 can, for instance, be coffee grindings or one of the beverage starting materials 9, 11 can, for instance, comprise a creamer and/or sugar.

The use of such capsules is advantageous as they can provide an additional firmness to the compacted coffee starting material, which is favourable during packaging and transporting the coffee tablets 1. Since the capsules dissolve during preparation of the coffee, the coffee tablets 1 gradually disintegrate and gradually release the coffee extracts so that a mild coffee with a good quality is obtained.

Coffee tablets provided with a single capsule are also understood to form part of the invention. Here, the capsule may be manufactured from sugar or coffee powder of a combination thereof. Other additions too can be incorporated in the capsule. Here, mocha, cocoa and the like can be considered.

Further, the coffee parameters mentioned, at a specific compressive pressure during manufacture of the tablets, are selected preferably such that the tablet, when dropped from 1.5 meters, loses no more than 5% of its weight in crumbling pieces. Such a tablet has the advantage that it does not shatter into bits when the consumer drops the tablet on the floor.

It will be clear that the invention is not limited to the exemplary embodiment described, but that various modifications are possible within the framework of the invention, as defined by the claims. For instance, the coffee tablet can have various forms, and further materials and/or additives may have been added to the coffee starting material.

## Claims

1. A method for manufacturing a coffee tablet designed for preparing coffee therewith, wherein an mount of coffee starting material is compacted at a particular compressive pressure so that a coffee tablet with a particular hardness is obtained, while the particular hardness at a particular compressive pressure depends on a number of coffee parameters, such as moisture content of the coffee starting material, degree of roast of the coffee starting material and/or pouring volume of the coffee starting material, whose coffee parameter values are selected such that the obtained hardness of the coffee tablet effects the disintegration thereof at a desired moment, in a desired manner.

2. A method according to claim 1, wherein the particular compressive pressure is in the range of 70 - 130 bar, and the hardness of the coffee tablet, depending on the coffee parameter values at the particular compressive pressure, is in the range of 20 - 75 N, more particularly 30 - 55 N.

3. A method according to any one of the preceding claims, wherein the coffee parameter value of the degree of roast of the coffee starting material prior to compacting of the coffee tablet is in the range of 80 - 30, preferably between 60 - 40, and, more particularly, is substantially 50.

4. A method according to any one of the preceding claims, wherein the coffee parameter value of the pouring volume of the coffee starting material prior to compacting the coffee tablet is preferably in the range of 500 - 880 ml per 250 g of coffee starting material and, more particularly, is approximately 700 ml per 250 g of coffee starting material.

5. A method according to any one of the preceding claims, wherein the coffee parameter value of the moisture content of the coffee starting material prior to compacting of the coffee tablet is 2 - 8%, preferably 2 - 6% and, more particularly, is approximately 4%.

6. A method according to any one of claims 3 - 5, wherein the coffee parameter values of degree of roast, pouring volume and moisture content do not exceed said limits of the range mentioned for that coffee parameter value.

7. A method according to any one of claims 4 - 7, wherein, first, the degree of roast of the coffee starting material is determined and, depending thereon, the moisture content and/or the pouring volume of the coffee starting material is determined.

8. A method according to any one of the preceding claims, wherein the coffee starting material are coffee grindings obtained by grinding roasted coffee beans.

9. A method according to any one of claims 3-8, wherein the coffee starting material is ground to form coffee grindings with a particle size of 0.3 - 0.6 mm, more particularly with a particle size of 0.45 mm.

10. A method according to any one of the preceding claims, wherein, after grinding of the roasted beans, the coffee grindings are not finished prior to compacting of the grindings.

11. A method according to any one of the preceding claims, wherein after compacting the coffee tablet with a first hardness around the compacted coffee tablet, at least one further layer of coffee starting material is composed with a different hardness, so that the coffee tablet comprises at least two layers of different hardnesses.

12. A method according to any one of the preceding claims, wherein the pressed coffee tablet is encapsulated by at least one liquid-soluble capsule.

13. A coffee tablet for preparing coffee, preferably manufactured with a method according to any one of the preceding claims, wherein the coffee tablet has a particular hardness which has been obtained from an amount of compacted coffee starting material compacted at a particular compressive pressure, wherein the particular hardness at a particular compressive pressure is obtained depending on a number of coffee parameters, such as moisture content of the coffee starting material, degree of roast of the coffee starting material and/or pouring volume of the coffee starting material, whose coffee parameter values have been selected such that the hardness of the coffee tablet is designed for disintegration thereof at a desired moment, in a desired manner.

14. A coffee tablet according to claim 13, wherein the coffee tablet has a hardness which is in the range of 20 - 75 N, more particularly 30 - 55 N.

15. A coffee tablet according to claim 13 or 14, wherein the coffee parameter value of the degree of roast of the coffee starting material is in the range of 80 - 30, preferably between 60 - 40, and, more particularly, is substantially 50.

16. A coffee tablet according to any one of claims 13 - 15, wherein the coffee parameter value of the pouring volume of the coffee starting material is preferably in the range of 500-880 ml per 250 g of coffee starting material and, more particularly, approximately 700 ml per 250 g of coffee starting material.

17. A coffee tablet according to any one of claims 13 - 16, wherein the coffee parameter value of the moisture content of the coffee starting material is 2 - 8 %, is preferably 2 - 6% and, more particularly, is approximately 4%.

18. A coffee tablet according to any one of claims 13 - 17, wherein the coffee tablet has a weight of 2 - 15 g, more particular a weight of 6 - 8 g.

19. A coffee tablet according to any one of claims 13 - 18, wherein the coffee tablet comprises a first part with a first hardness and at least a second part provided therearound with the same hardness or a different hardness from the first hardness.

20. A coffee tablet according to any one of claims 13 - 19, wherein the coffee tablet is provided with at least one liquid-soluble capsule.

21. A coffee tablet according to any one of claims 13 - 20, wherein the said coffee parameters at a particular compressive pressure during manufacture of the tablet are selected such that the tablet, when dropped from 1.5 meters, loses no more than 5% of its weight in crumbling pieces.
